# EUROPEAN PATENT SPECIFICATION

(11) **EP 1 387 580 B1**
(45) Date of publication and mention of the grant of the patent: **11.04.2007**
(21) Application number: 03251214.7
(22) Date of filing: 28.02.2003
(51) Int. Cl.: H04N 7/025, H04N 5/00

(54) **Teleweb apparatus**
Telewebgerät
Appareil téléweb

(30) Priority: 29.07.2002 KR 2002044597
(43) Date of publication of application: 04.02.2004
(73) Proprietor: SAMSUNG ELECTRONICS CO., LTD., Suwon-si, Gyeonggi-do 442-742 (KR)
(72) Inventor: Koh, Sang-sin, Seoul (KR)
(74) Representative: Geary, Stuart Lloyd

(56) References cited:
- EP-A- 1 361 752
- WO-A-00/55794
- WO-A-00/64162
- US-B1- 6 405 372
- BRÜCKNER W: "TeleWeb - teletext with internet connection" , EBU REVIEW TECHNICAL, EUROPEAN BROADCASTING UNION, GENEVA, CH, PAGE(S) 1-8-8-8 XP002258604 ISSN: 1018-7391 * the whole document *

## Description

The present invention relates to a television apparatus including a tuner for tuning signals received from by an antenna, means for displaying information included in a television signal received by said tuner and search means for controlling the tuner to search for television signals including information signals, and to an extended teleweb channel search method of a teleweb player .

Until recently, television (TV) viewers have no way of interacting with broadcast television programmes. However, with the coming of digital TV, it is anticipated that there will be diverse lifestyle changes for the ordinary viewer, such as being able to send opinions to the broadcast stations, using the Internet through the TV, and so on. For example, opinions on the direction of a television drama could be sent through the TV and responses to and results of questionnaires from a broadcast station can be seen in real time. Furthermore, on-line shopping can be done through the TV just like using on-line shopping malls through computers.

The diverse uses of a digital TV as above come from high data transfer rates of the digital TV. That is, a broadcast station can provide more multimedia contents as well as play the role of an Internet service provider, by using the high compression rate of the digital signal. Through it, TV viewers can buy goods using only simple manipulations of a remote controller of an existing TV and use a variety of services such as banking or the like.

In the meantime, the European Association of Consumer Electronics Manufactures (EACEM) has proposed a hypertext mark-up language-based teleweb system in order to enable viewers to use the Internet conveniently while watching TVs.

The teleweb refers to web contents included in a broadcast signal, and is inserted in the vertical blanking intervals of a broadcast signal as with teletext. That is, the teleweb can be considered to be a next generation teletext, which can include full-colour images and high-resolution graphics in addition to text. Accordingly, those who want to see weather forecasts can weather-related satellite pictures together with detailed maps. Furthermore, teleweb supports all the analogue and digital broadcasts. Analogue TV is based on the teletext packet 31 datacast, and the digital TV is based on MPEG2/DVB (Digital Video Broadcasting).

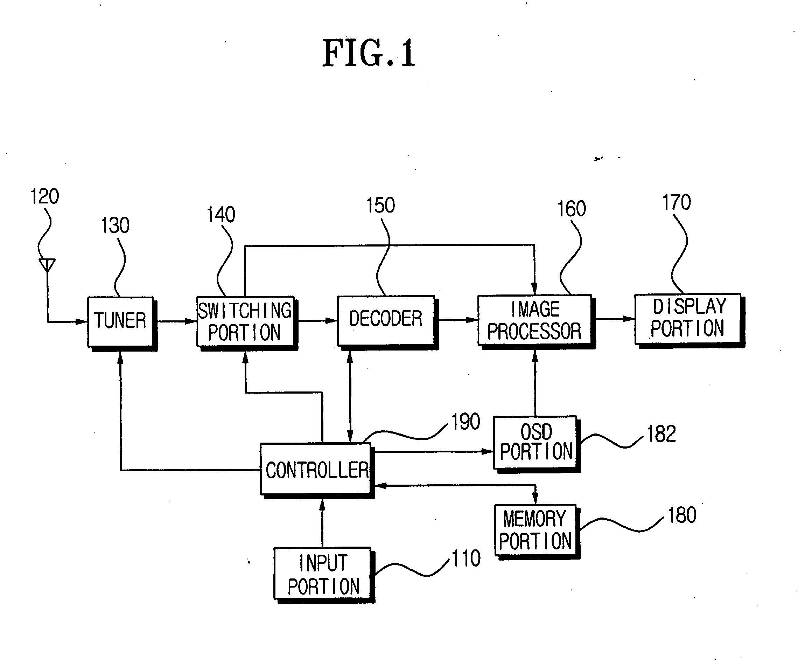

Figure 1 is a schematic block diagram of a conventional digital TV connected to an antenna 120. The digital TV includes an input portion 110, a tuner 130, a switching portion 140, a decoder 150, an image processor 160, a display portion 170, a memory portion 180, an OSD portion 182 and a controller 190.

The input portion 110 receives user commands for system operation and includes a remote controller (not shown) and a key input portion (not shown) provided on the front of the TV. Keys provided on the remote controller or on the front of the TV include a mode selection key for selecting between a broadcast mode for receiving broadcasts and a teleweb mode for showing teleweb information, an 'automatic search' key for automatically tuning the tuner to a broadcast channel and a 'teleweb search key' for searching for broadcast channels in which teleweb is included.

The tuner 130 transfers the tuned-to broadcast signal from the antenna 120 to the switching portion 140.

The switching portion 140 separates the broadcast signal from the tuner 130 into a video signal and a teleweb signal and outputs them.

The decoder 150 decodes the teleweb signal and extracts the teleweb data.

The image processor 160 processes the video signal from the switching portion 140 or the teleweb data from the decoder 150 for display by display portion 170.

The memory 180 stores the teleweb data from the switching portion 140.

The on screen display (OSD) portion 182 is controlled so that information, relating to the use of the TV, is displayed by the display portion 170.

The controller 190 controls the overall operation of the TV and, in particular, controls the TV in order for video or teleweb data to be displayed in accordance with the mode selected through the input portion 110. Furthermore, if the "automatic search" key on the input portion 110 is pressed, the controller 190 searches the digital TV region of the spectrum and automatic-selects channels having broadcast signals. Furthermore, if the "teleweb search key" is pressed, the controller 190 searches for teleweb information in each broadcast signal added by automatic channel searches and selects channels which include teleweb information.

In the above-described digital TV, if a broadcast mode is selected through the input portion 110, the controller 190 controls the TV to display the received video. However, if teleweb data is included in the received broadcast signal, the digital TV stores the teleweb data in the memory portion 180. The digital TV, if switched from the broadcast mode to the teleweb mode, reads out the teleweb data, stored in the memory portion 180, for display on the screen. Thereafter, a user can view teleweb data displayed on the screen using a remote controller or a some other user input tool.

However, conventional teleweb apparatus, like the above-described digital TV, carry out searching for teleweb channels received through the antenna upon a teleweb search command input of a user but, if a broadcast transfer medium such as a set-top box for satellite broadcast receptions is connected through an external device connection terminal, the teleweb apparatus does not perform searching for teleweb information of satellite broadcasts transferred through the external device connection terminal, causing a problem which inconveniences users. That is, in conventional teleweb apparatus, if a teleweb search command is input broadcast signals received through the external device are omitted from the search.

In order to solve the above problem, it is an object of the present invention to provide a teleweb player having an extended teleweb search function and a search method therefor which are capable of providing a user with more diverse teleweb information selection opportunities and using teleweb information more conveniently.

EP-A-1361752 and US-B-6405372 describe television apparatuses in which two tuners are used so that auxiliary information signals can be received without interrupting viewing. The skilled reader will appreciate that these have nothing to do with the present invention which relates to extending a teleweb search function to additional signal sources.

Background information regarding teleweb can be found in Brueckner, W., *"TeleWeb* - *teletext with internet connection"*, EBU Technical Review, April 2002.

According to the present invention, there is provided a television apparatus according to claim 1.

According to the present invention, there is also provided an extended teleweb channel search method of a teleweb player according to claim 8.

An embodiment of the present invention will now be described, by way of example, with reference to Figures 2 to 6 of the accompanying drawings, in which:
Figure 1 is a schematic block diagram of a conventional digital TV;
Figure 2 is a schematic block diagram of a digital TV according to the present invention;
Figure 3 is a flowchart illustrating an automatic channel search process of the digital TV of Figure 2;
Figure 4 is a flowchart illustrating a teleweb search process of the digital TV of Figure 2;
Figure 5 is a flowchart illustrating a teleweb display process of the digital TV of Figure 2; and
Figure 6 is a showing a a teleweb search progress display of the digital TV of Figure 2.

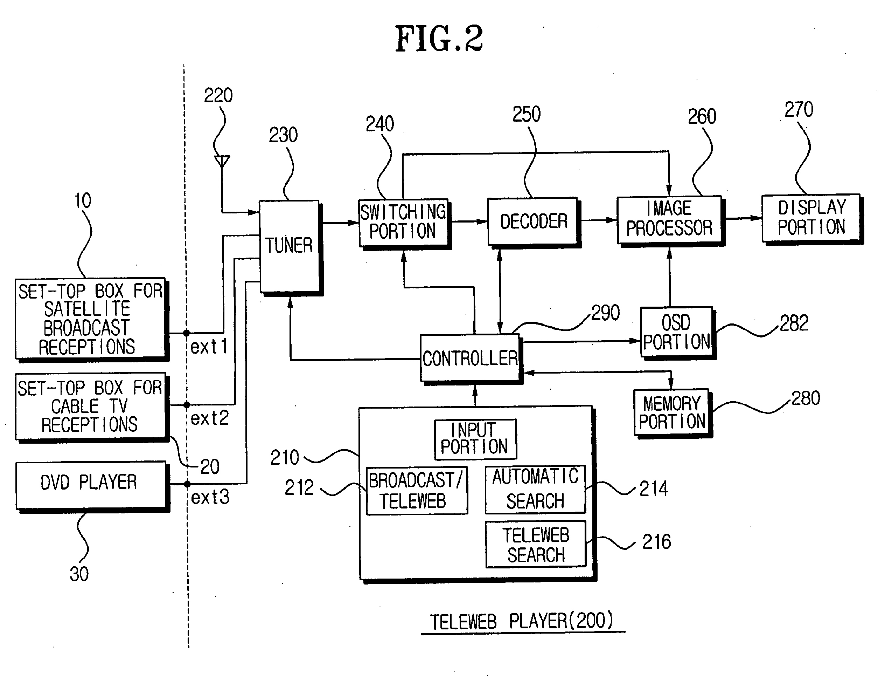

Referring to Figure 2, a digital TV is connected to an antenna 220 and includes an input portion 210, a tuner 230, a switching portion 240, a decoder 250, an image processor 260, a display portion 270, a memory portion 280, an on-screen display (OSD) portion 282 and a controller 290.

The input portion 210 receives system operation commands from a user and includes a remote controller (not shown) and/or a key input portion provided on the front of the TV. The keys provided on a remote controller, or the key input portion on the front of the TV, include a mode selection key 212 for selecting between broadcast and teleweb modes, an "automatic search" key 214 for inputting an automatic search command for locating active broadcast channels, a "teleweb search" key 216 for searching for broadcast channels including teleweb data, and so on. Here, the "teleweb search" key 216 is not separately provided, but the "automatic search" key 214 can be used for both of the keys 214, 216 according to the presently displayed mode. That is, the "automatic search" key acts as the "automatic search" key when the present mode is broadcast mode and as the "teleweb search" key when the present mode is teleweb mode.

The tuner 230 tunes to a user-selected channel, received via the antenna 220, or selected the output of external device connection terminals ext1, ext2, ext 3, output it to the switching portion 240. The external device connection terminals are connected to a set-top box 10 for satellite broadcast reception, a set-top box 20 for cable broadcast reception and a DVD player 30 respectively.

The switching portion 240 separates the video signal and the teleweb signal from the signal from the tuner 230.

The decoder 250 decodes the teleweb signal and outputs teleweb data.

The image processor 260 processes the video signal from the switching portion 260 and teleweb data from the decoder 250 for display on the screen of the display portion 270.

The memory portion 280 stores teleweb data from the switching portion 240.

The OSD portion 282 is controlled in order for information relating to the use and/or operation of the TV to be displayed.

The controller 290 has overall control of the TV and, in particular, controls the image processor 260 for the display of video or teleweb data by the display portion 270 according to whether the present mode is broadcast mode or teleweb mode. When the "automatic search" key 214 is pressed, the controller 290 searches for active broadcast channels in the digital TV spectrum. When "teleweb search" key 216 is pressed, the controller 290 searches the located active broadcast channels and the signals input via the external device connection terminals ext1, ext2, and ext3, for teleweb signals.

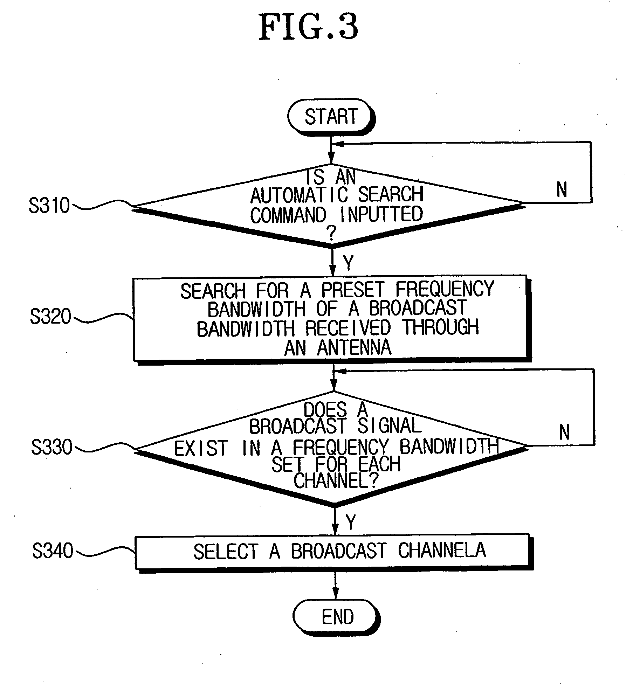

Referring to Figure 3, if the user inputs an automatic channel search command using the "automatic search" key 214, provided in the input portion 210 (S310), the controller 290 controls the tuner 230 to search the digital TV spectrum active broadcast channels (S320, S330) and select any that are found (S340).

If a user selects one of the channels, selected in the aforementioned search, using the input portion 210, the controller 290 controls the tuner 230 to tune to the selected channel and the controller 290 controls the image processor 260 to process video signal component from the tuner 230 for display by the display portion 270.

In both broadcast and teleweb modes, the user can search for channels including teleweb information by pressing the "teleweb search" key 216.

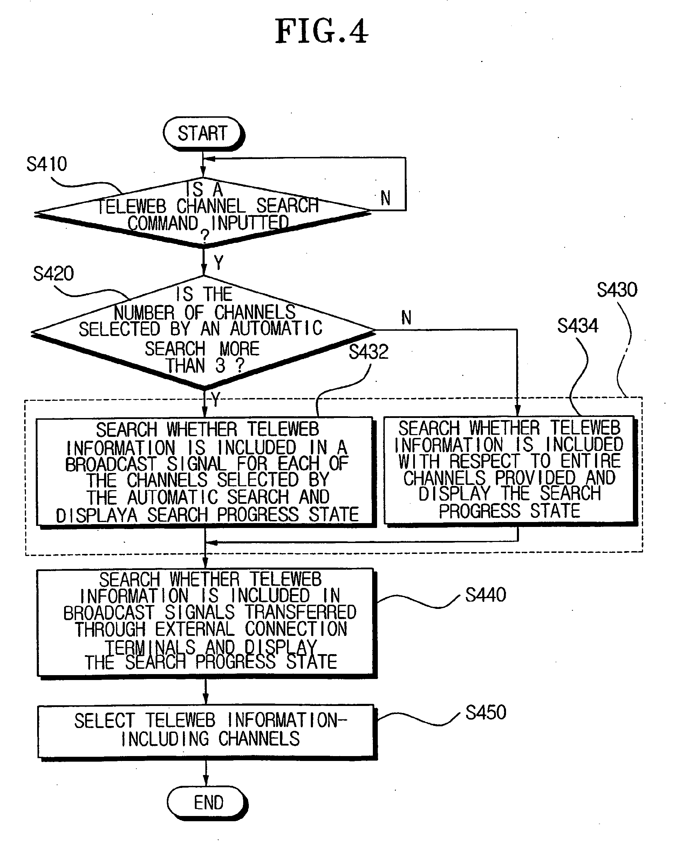

Referring to Figure 4, if a user inputs a teleweb search command using the "teleweb search" key 216 (S410), the controller 290 determines whether the number of automatically located and selected channels is more than a predetermined number, for example, 3 (S420). The controller 290 searches for channels including teleweb information in broadcast signals for these automatically located and selected channels (S430). That is, if the number of automatically located and selected channels is more than 3, the controller 290 searches for teleweb information only in the automatically located and selected channels (S432) and, if the number of automatically located and selected channels is less than 3, the controller 290 searches for teleweb information in all of the channels in the digital TV spectrum (S434). After completing the search for teleweb information, the controller 290 searches for teleweb information in signals from the external device connection terminals (S440). That is, after searching for teleweb information in respective satellite broadcast signals from the satellite TV set-top box 10, connected to the first external device connection terminal ext1, the controller 290 searches for teleweb information in cable broadcast channels from the cable TV set-top box 20, connected to the second external device connection terminal ext2. Furthermore, the controller 290 searches for teleweb information in a DVD playback signal from a DVD player 30 connected to the third external device connection terminal ext3. Thereafter, the controller 290 automatic-selects channels having broadcast signals with teleweb information from broadcast signals received through the antenna 220 and broadcast signals received through the respective external device connection terminals ext1, ext2, ext3.

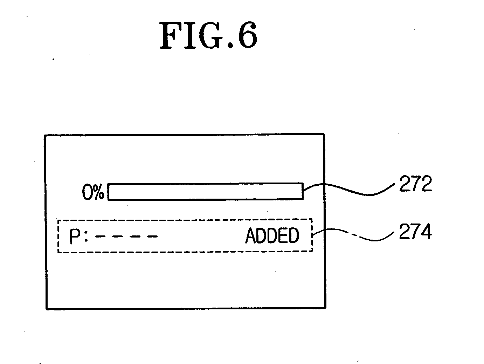

The controller 290, when searching for teleweb-including channels, regardless of the number of channels, controls the OSD portion 282 to display a teleweb information search progress state on the display portion 270 as shown in Figure 6. The controller 290 controls the OSD portion 282 to sequentially display the channel presently being searched in the lower part of the screen in Figure 6 in synchronization with the teleweb information search progress. Furthermore, the controller 290 controls the OSD portion 282 to display the progress indicator 274 based on the teleweb search progress state on the screen.

When teleweb information-including channels are automatically selected as above, a user can choose one teleweb channel out of the selected teleweb-including channels and view the teleweb information of the chosen channel.

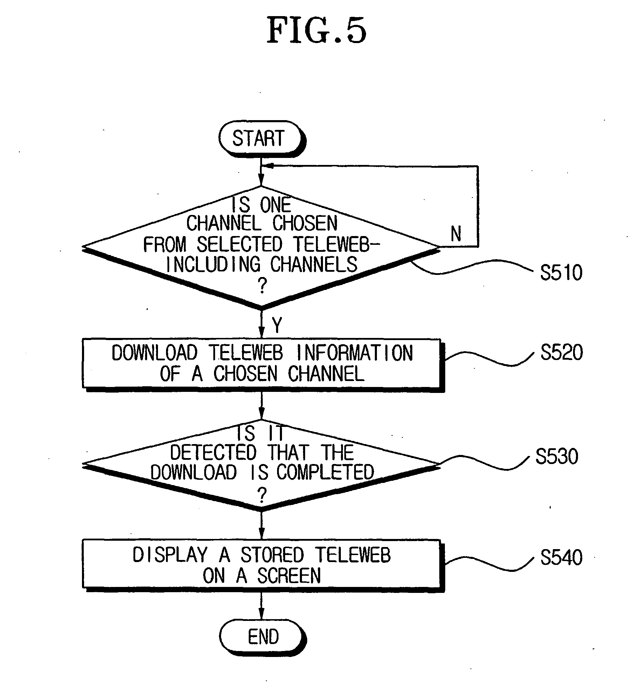

Referring to Figure 5, when a user selects one of the teleweb-including channelsusing the input portion 210, the controller 290 retrieves the teleweb information included in the broadcast signal of the selected channel (S520). That is, the controller 290 the teleweb data of the selected channel in the memory portion 280. When it is detected that the retrieval and storage is complete (S530), the controller 290 controls the decoder 220 to decode the stored teleweb data and transfer it to the image processor 260 which outputs a signal to drive the display portion 270 to display the teleweb information (S540).

As stated above, the teleweb display apparatus and the extended search method of the teleweb display apparatus according to the present invention can extend teleweb information-including channels to external device connection terminals for search, so that a user can more easily use more teleweb information than before.

## Claims

1. A television apparatus including :
a tuner (230) for tuning to signals received by an antenna (220) ;
means (250, 260, 270) for displaying information included in a television signal received by said tuner (230);
an auxiliary television signal input (ext1, ext2, ext3);
an input means (210) for enabling a user to input an automatic channel search command and a teleweb search command; and
search means (290) for controlling the tuner (230) to search for broadcast channels containing television signals, and for television signals including teleweb information; wherein:
the search means (290) is arranged to select broadcast channels containing television signals received at the antenna (220) in response to an automatic search command input to the apparatus, and the search means (290) is arranged to search whether teleweb information is included with respect to all broadcast channels received by the antenna (220) if the number of broadcast channels selected through the automatic channel search is less than a predetermined number, and to search whether teleweb information is included with each of the broadcast channels selected through the automatic channel search if the number of selected broadcasts channels is greater than the predetermined number, the search means being further arranged to search for television signals including teleweb information from among signals received at the auxiliary television signal input (ext1, ext2, ext3), in response to a teleweb search commands.

2. An apparatus according to claim 1, wherein the search means (290) is implemented by a control means (290).

3. An apparatus according to claims 1 or 2, comprising:
means for connecting the auxiliary television signal input (ext1, ext2, cxt3) to the tuner (230); and
a switching means (240) for separating a teleweb signal from a broadcast signal received from the tuner (230);
wherein the means (250, 260, 270) for displaying teleweb information comprises :
a decoding means (250) for decoding teleweb signals from the switching means (240),
an image processing means (260) for processing images for the teleweb information decoded by the decoding means (250) for display on a screen, and
a display means (270) for displaying teleweb information on the screen.

4. An apparatus according to claim 3, further comprising means (280) for storing teleweb information.

5. An apparatus according to claim 4 wherein the control means (290) is arranged to retrieve teleweb information for a broadcast channel selected by the user from the storage means (280) for display on the screen.

6. An apparatus according to claims 3 to 5, further comprising an on-screen display means (282) for displaying the progress state of teleweb channel searches on the screen, wherein the control means (290) controls the on-screen display means (282) to display the releweb search progress stare on the screen.

7. An apparatus according to claim 6, wherein the display means (270) is arranged to sequentially display on the screen the channels automatically selected through the automatic channel search and the channels transferred from the external device connection terminals (ext1, exr2, ext3).

8. An extended teleweb channel search method for use in a teleweb player, comprising the steps of:
searching whether a broadcast signal exists for each of channels received through an antenna (220), when an automatic channel search commands is inputted and automatically selecting said channels containing a broadcast signal; and
searching whether teleweb information is included with respect to all channels receivable through the antenna (220), if the number of the channels selected in the automatic channel search is less than a predetermined number, searching wether teleweb information is included with each of the broadcast channels selected in the automatic channels search if the number of selected broadcast channels is greater than the predetermined number, and searching whether teleweb information is included in signals transferred through auxiliary television signal inputs (ext1, ext2, ext3), in response to a teleweb search command.

9. The extended teleweb channel search method as claimed in claim 8, further comprising a step of indicating on a screen (270) a progress state of the teleweb search, when a teleweb search command is inputted.

10. The extended teleweb channel search method as claimed in claim 9, therein the step of displaying on the screen (270) the teleweb search progress state is to sequentially display on the screen the channels automatically selected and the channels transferred from the auxiliary television signal inputs (ext1, ext2, ext3) in synchronization with the teleweb channel search progress state.

11. The extended teleweb channel search method as claimed in claim 10, wherein the step of displaying the teleweb search progress state on the screen (270) further displays on the screen a progress indicator which indicates the teleweb channel search progress state.

## Patentansprüche

1. Ein Fernsehgerät, einschließend:
einen Tuner (230) für das Einstellen auf durch die Antenne (220) empfangene Signale;
Mittel (250, 260, 270) für das Darstellen der in einem Fernseh-Signal, empfangenen durch den Tuner (230), enthaltenen Information;
einen zusätzlichen Fernseh-Signal-Eingang (ext1, ext2, ext3);
ein Eingabe-Mittel (210) für das Befähigen eines Nutzers, einen Befehl für automatische Kanal-Suche und einen Befehl für automatische TeleWeb-Suche einzugeben; und
Such-Mittel (290) für das Steuern/Regeln des Tuners (230), um nach Broadcast-Kanälen (Rundfunk/Fernsehfunk-Kanäle), enthaltend Fernseh-Signale, und nach Fernseh-Signalen, enthaltend TeleWeb-Information zu suchen; wobei:
das Such-Mittel (290) ausgestaltet ist, um an der Antenne (220) empfangene Broadcast-Kanäle, enthaltend Fernseh-Signale, in Reaktion auf eine Befehlseingabe für automatische Suche an das Gerät, auszuwählen und das Such-Mittel (290) ausgestaltet ist, um betreffend alle durch die Antenne (220) empfangenen Broadcast-Kanäle zu suchen, ob TeleWeb-Information enthalten ist, falls die durch die automatische Kanal-Suche ausgewählte Anzahl von Broadcast-Kanälen kleiner ist als eine vorgegebene Anzahl, und um in jedem der durch die automatische Kanal-Suche ausgewählten Broadcast-Kanäle zu suchen, ob TeleWeb-Information enthalten ist, falls die Anzahl der ausgewählten Broadcast-Kanäle größer ist als eine vorgegebene Anzahl, das Such-Mittel außerdem ausgestaltet, um in Reaktion auf einen TeleWeb-Such-Befehl nach TeleWeb-Information enthaltenden Fernseh-Signalen unter den an dem zusätzlichen Fernseh-Signal-Eingang (ext1, ext2, ext3) empfangenen Signalen zu suchen.

2. Ein Gerät nach Anspruch 1, wobei das Such-Mittel (290) in einem Steuerung/Regelungs-Mittel (290) implementiert ist.

3. Ein Gerät nach Anspruch 1 oder 2, umfassend:
Mittel für das Verbinden des zusätzlichen Fernseh-Signal-Eingangs (ext1, ext2, ext3) mit dem Tuner (230); und
ein Schalt-Mittel (240) für das Separieren eines TeleWeb-Signals aus einem Broadcast-Signal, empfangen von dem Tuner (230);
wobei das Mittel (250, 260, 270) für das Darstellen der TeleWeb-Information umfasst:
ein Decodier-Mittel (250) für das Decodieren der TeleWeb-Signale aus dem Schalt-Mittel (240);
ein Bild-Verarbeitungs-Mittel (260) für das Aufbereiten der Bilder, von durch das Decodier-Mittel decodierter TeleWeb-Information, für die Darstellung auf einem Bildschirm; und
ein Darstellungs-Mittel (270) für das Darstellen der TeleWeb-Information auf dem Bildschirm.

4. Ein Gerät nach Anspruch 3, außerdem umfassend Mittel (280) für das Speichern der TeleWeb-Information.

5. Ein Gerät nach Anspruch 4, wobei das Steuerung/Regelungs-Mittel (290) ausgestaltet ist, um TeleWeb-Information für einen durch den Nutzer ausgewählten Broadcast-Kanal aus dem Speicher-Mittel (280) für die Darstellung auf dem Bildschirm abzurufen.

6. Ein Gerät nach Anspruch 3 bis 5, außerdem umfassend ein, auf dem Bildschirm' (on-screen) -Darstellungs-Mittel (282) für das Darstellen des Fortschritt-Zustands von TeleWeb-Suchen auf dem Bildschirm, wobei das Steuerung/Regelungs-Mittel (290) das auf dem Bildschirm'-Darstellungs-Mittel (282) steuert/regelt, um den Fortschritts-Zustand der TeleWeb-Suche auf dem Bildschirm darzustellen.

7. Ein Gerät nach Anspruch 6, wobei das Darstellungs-Mittel (270) ausgestaltet ist, um sequentiell die durch die automatische Kanal-Suche automatisch ausgewählten Kanäle und die von dem Extern-Vorrichtung-Verbindungs-Anschluss (ext1, ext2, ext3) transferierten Kanäle auf dem Bildschirm darzustellen.

8. Ein erweitertes TeleWeb-Kanal-Such-Verfahren für die Anwendung in einem TeleWeb-Wiedergabegerät, umfassend diese Schritte:
Suchen, ob ein Broadcast-Signal für jeden der durch eine Antenne (220) empfangenen Kanäle vorhanden ist, wenn eine Befehl für automatische Kanal-Suche eingegeben ist und automatisches Auswählen der ein Broadcast-Signal enthaltenden Kanäle; und
in Reaktion auf einen TeleWeb-Such-Befehl, Suchen ob TeleWeb-Information in allen durch die Antenne (220) empfangbaren Kanälen enthalten ist, wenn die Anzahl der in der automatischen Kanal-Suche ausgewählten Kanäle kleiner ist als eine vorgegebene Anzahl, Suchen ob in jedem der in der automatischen Kanal-Suche ausgewählten Kanäle TeleWeb-Information enthalten ist, wenn die Anzahl der ausgewählten Broadcast-Kanäle größer ist als eine vorgegebene Anzahl, und Suchen ob in den durch die zusätzlichen Fernseh-Signal-Eingänge (ext1, ext2, ext3) transferierten Signalen TeleWeb-Information enthalten ist.

9. Das erweiterte TeleWeb-Kanal-Such-Verfahren nach Anspruch 8, außerdem umfassend einen Schritt des Anzeigens eines Fortschritt-Zustands der TeleWeb-Suche auf einem Bildschirm (270), wenn ein TeleWeb-Such-Befehl eingegeben ist.

10. Das erweiterte TeleWeb-Kanal-Such-Verfahren nach Anspruch 9, wobei der Schritt des Darstellens des TeleWeb-Such-Fortschritts auf dem Bildschirm (270) darin besteht, auf dem Bildschirm sequentiell die automatisch ausgewählten Kanäle und die aus den zusätzlichen Fernseh-Signal-Eingängen (ext1, ext2, ext3) übertragenen Kanäle in Synchronisation mit dem Fortschritts-Zustand der TeleWeb-Kanal-Suche darzustellen.

11. Das erweiterte TeleWeb-Kanal-Such-Verfahren nach Anspruch 10, wobei der Schritt des Darstellens des Fortschritt-Zustands der TeleWeb-Suche auf dem Bildschirm (270) außerdem einen Fortschritts-Indikator auf dem Bildschirm darstellt, welcher den Fortschritts-Zustand der TeleWeb-Suche anzeigt.

## Revendications

1. Appareil de télévision comprenant :
un syntoniseur (230) pour syntoniser sur des signaux reçus par un antenne (220) ;
un moyen (250, 260, 270) pour afficher des informations incluses dans un signal de télévision reçu par ledit syntoniseur (230) ;
une entrée de signaux de télévision auxiliaire (ext1, ext2, ext3) ;
un moyen d'entrée (210) pour permettre à un utilisateur d'entrer une commande de recherche automatique de canaux et une commande de recherche téléweb ; et
un moyen de recherche (290) pour commander le syntoniseur (230) pour rechercher des canaux de diffusion contenant des signaux de télévision, et des signaux de télévision comprenant des informations téléweb ; dans lequel :
le moyen de recherche (290) est disposé pour sélectionner des canaux de diffusion contenant des signaux de télévision reçus par l'antenne (220) en réponse à une entrée de commande de recherche automatique sur l'appareil, et le moyen de recherche (290) est disposé pour rechercher si des informations téléweb sont incluses dans tous les canaux de diffusion reçus par l'antenne (220) si le nombre de canaux de diffusion sélectionnés via la recherche automatique de canaux est inférieur à un nombre prédéterminé, et pour rechercher si des informations téléweb sont incluses dans chacun des canaux de diffusion sélectionnés via la recherche automatique de canaux si le nombre de canaux de diffusion sélectionnés est supérieur au nombre prédéterminé, le moyen de recherche étant en outre disposé pour rechercher des signaux de télévision incluant des informations téléweb parmi des signaux reçus par l'entrée de signaux de télévision auxiliaire (ext1, ext2, ext3), en réponse à une commande de recherche téléweb.

2. Appareil selon la revendication 1, dans lequel le moyen de recherche (290) est implémenté par un moyen de commande (290).

3. Appareil selon les revendications 1 ou 2, comprenant :
un moyen pour connecter l'entrée de signaux de télévision auxiliaire (ext1, ext2, ext3) au syntoniseur (230) ; et
un moyen de commutation (240) pour séparer un signal téléweb d'un signal de diffusion reçu du syntoniseur (230) ;
dans lequel le moyen (250, 260, 270) pour afficher des informations téléweb comprend :
un moyen de décodage (250) pour décoder des signaux téléweb provenant du moyen de commutation (240),
un moyen de traitement d'image (260) pour traiter des images des informations téléweb décodées par le moyen de décodage (250) pour un affichage sur un écran, et
un moyen d'affichage (270) pour afficher des informations téléweb sur l'écran.

4. Appareil selon la revendication 3, comprenant en outre un moyen (280) pour stocker des informations téléweb.

5. Appareil selon la revendication 4 dans lequel le moyen de commande (290) est disposé pour récupérer des informations téléweb d'un canal de diffusion sélectionné par l'utilisateur dans le moyen de stockage (280) pour un affichage sur l'écran.

6. Appareil selon les revendications 3 à 5, comprenant en outre un moyen d'affichage sur écran (282) pour afficher l'état de progression de recherches de canaux téléweb sur l'écran, dans lequel le moyen de commande (290) commande le moyen d'affichage sur écran (282) pour afficher l'état de progression des recherches téléweb sur l'écran.

7. Appareil selon la revendication 6, dans lequel le moyen d'affichage (270) est disposé pour afficher de façon séquentielle sur l'écran les canaux sélectionnés automatiquement via la recherche automatique de canaux et les canaux transférés depuis les terminaux de connexion d'un dispositif externe (ext1, ext2, ext3).

8. Procédé de recherche étendue de canaux téléweb pour une utilisation dans un dispositif téléweb, comprenant les étapes de :
rechercher si un signal de diffusion existe pour chacun des canaux reçus via une antenne (220), lorsqu'une commande de recherche automatique de canaux est entrée et sélectionner automatiquement lesdits canaux contenant un signal de diffusion ; et
rechercher si des informations téléweb sont incluses dans tous les canaux pouvant être reçus via l'antenne (220) si le nombre de canaux sélectionnés dans la recherche automatique de canaux est inférieur à un nombre prédéterminé, rechercher si des informations téléweb sont incluses dans chacun des canaux de diffusion sélectionnés lors de la recherche automatique de canaux si le nombre de canaux de diffusion sélectionnés est supérieur à un nombre prédéterminé, et rechercher si des informations téléweb sont incluses dans des signaux transférés via des entrées de signaux de télévision auxiliaires (ext1, ext2, ext3), en réponse à une commande de recherche de téléweb.

9. Procédé de recherche étendue de canaux téléweb tel que revendiqué dans la revendication 8, comprenant en outre une étape d'indication sur un écran (270) d'un état de progression de la recherche téléweb, lorsqu'une commande de recherche téléweb est entrée.

10. Procédé de recherche étendue de canaux téléweb tel que revendiqué dans la revendication 9, dans lequel l'étape d'affichage sur l'écran (270) de l'état de progression de la recherche téléweb consiste à afficher de façon séquentielle sur l'écran les canaux sélectionnés automatiquement et les canaux transférés par les entrées de signaux de télévision auxiliaires (ext1, ext2, ext3) en synchronisation avec l'état de progression de la recherche de canaux téléweb.

11. Procédé de recherche étendue de canaux téléweb tel que revendiqué dans la revendication 10, dans lequel l'étape d'affichage de l'état de progression de la recherche téléweb sur l'écran (270) affiche en outre sur l'écran un indicateur de progression qui indique l'état de progression de la recherche de canaux téléweb.
